Europäisches Patentamt

European Patent Office

Office européen des brevets

(19)

(11) Veröffentlichungsnummer: **0 352 701**
**A2**

# (12) EUROPÄISCHE PATENTANMELDUNG

(21) Anmeldenummer: 89113598.0

(22) Anmeldetag: 24.07.89

(51) Int. Cl.4: **H04Q 3/00** , **H04M 3/20** ,
**H04M 9/00**

(30) Priorität: 26.07.88 DE 3825386

(43) Veröffentlichungstag der Anmeldung:
**31.01.90 Patentblatt 90/05**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Böttger, Detlev, Dipl.-Ing.**
**Im Heimsoth 48**
**D-5840 Schwerte 4(DE)**

(54) **Verfahren zur Durchführung einer leistungsmerkmalsbezogenen Steuerprozedur in einem rechnergesteuerten Kommunikationssystem, insbesondere einem Key-Kommunikationssystem mit der Möglichkeit des sogenannten "Anklopfens".**

(57) Ein besetzt vorgefundener Teilnehmer kann durch ein Aufmerksamkeitszeichen auf eine ihn betreffende dringende Verbindungsanforderung hingewiesen werden (Anklopfen). Mit der Betätigung einer entsprechenden Funktionstaste (Servicetaste, Teilnehmertaste) wird der Rechnersteuerung eine Signalisierungsinformation durch den angeforderten Teilnehmer übermittelt. Damit wird bei teilnehmerseitig weiterhin geschlossener Leitungsschleife die Verbindung hergestellt. Gleichzeitig wird die bestehende Verbindung in einen Verbindungszustand gebracht, der eine Fortführung des Gespräches zu einem späteren Zeitpunkt ermöglicht (externe Leitung wird in den Haltezustand übergeführt, bei einer internen Gesprächsverbindung erfolgt die Zuschaltung des anfordernden Teilnehmers nach Art einer Konferenzverbindung).

EP 0 352 701 A2

## Verfahren zur Durchführung einer leistungsmerkmalsbezogenen Steuerprozedur in einem rechnerge- steuerten Kommunikationssystem, insbesondere einem Key-Kommunikationssystem, mit der Möglich- keit des sogenannten "Anklopfens"

Die Erfindung betrifft ein Verfahren zur Durch- führung einer leistungsmerkmalsbezogenen Steuer- prozedur im Zusammenhang mit der Möglichkeit, in einem rechnergesteuerten Kommunikationssy- stem, insbesondere einem Key-Kommunikationssy- stem, einem Teilnehmer, der sich in einer Gesprächsverbindung befindet, eine ihn betreffende dringende Verbindungsanforderung durch ein dar- auf hinweisendes Aufmerksamkeitszeichen anzu- kündigen (Anklopfen), wobei für den Anschluß einer Endeinrichtung an das Kommunikationssystem eine der Übertragung von Nutzinformationen dienende Nutzverbindung und zusätzlich eine Steuerverbindung schaltbar ist, über die jeweils Informationen übertragbar sind, die u. a. aufgrund der bei der Betätigung von Tasten abgeleiteten Anreize gebildet werden.

Modern konzipierte Kommunikationssysteme sind nicht nur zur eigentlichen Vermittlungssteuerung, sondern auch zu einer Steuerung bzw. Realisierung zusätzlicher über den eigentlichen Vermitt- lungsvorgang hinausgehender Steuervorgänge be- fähigt. Solche zusätzlichen Funktionen werden im allgemeinen als Leistungsmerkmale bezeichnet, wobei eine große Anzahl unterschiedlichster Lei- stungsmerkmale bekannt ist. Derartige Leistungs- merkmale können entweder bei Belegen der Vermittlungseinrichtung oder aber während einer bereits bestehenden Gesprächsverbindung eingeleitet werden. Dies kann beispielsweise durch die Wahl bestimmter Ziffern bzw. Ziffernkombinationen oder durch die Betätigung sogenannter Funktionstasten erfolgen. Zu solchen Leistungsmerkmalen zählen beispielsweise akustische Hinweise für wartende Teilnehmer, die Verhinderung unerwünschter Verbindungen, die selbst tätige Rufweiterleitung und das Anklopfen. Vermittels dieses letztgenannten Leistungsmerkmals, für dessen Aktivierung der Teilnehmer eine Handhabung an seinem Endgerät vorzunehmen hat oder das auch nach Ablauf einer bestimmten Zeit automatisch nach Anwahl einer besetzten Teilnehmerstelle eingeleitet werden kann, ist ein sich in einer Gesprächsverbindung befindlicher Teilnehmer darüber zu informieren, daß ein anderer Teilnehmer ihn dringend zu sprechen wünscht. Hierzu wird in die bestehende Verbindung ein Aufmerksamkeitston aufgeschaltet und/oder diese Verbindungsanforderung auf dem Display des dem angeforderten Teilnehmer zugeordneten Endgerätes angezeigt. Üblicherweise kann der angeforderte Teilnehmer das Anklopfen mit dem Auflegen des Handapparates beantworten. Im Anklopfzustand liefert dies dann für die Rechnersteuerung die Informationen, die Verbindung zwischen der anfordernden und der angeforderten Teilnehmerstelle herzustellen.

Die voraussetzungsgemäß vorgesehene Nutzverbindungsmöglichkeit und die davon getrennte Steuerverbindungsmöglichkeit kann als Nutzkanal bzw. als Steuerkanal physikalisch auf dem gleichen Übertragungsmedium getrennt durch unterschiedliche Zeitlagen realisiert sein. Sie können aber auch durch jeweils zwei Adernpaare gebildet werden. Für ein Key-Kommunikationssystem, bei dem beispielsweise die einzelnen Endeinrichtungen über zwei voneinander unabhängige und jeweils eine Nutzverbindung und eine Steuerverbindung bildende Adernpaare sternförmig an das Kommunikationssystem angeschlossen sind, ist es bekannt, neben der normalen Wähltastatur weitere leitungs- bzw. teilnehmerindividuelle Tasten vorzusehen. Durch deren Betätigung erfolgt unmittelbar eine Belegung der zugeordneten Leitung und die Verbindungsherstellung zwischen der betreffenden Endeinrichtung und einer anderen internen Teilnehmerstelle. Weiterhin wird bei einem solchen Kommunikationssystem an jeder Endeinrichtung der vermittlungstechnische Zustand aller übrigen Endeinrichtungen und der Zustand der einzelnen externen Leitungen angezeigt. Neben der Anzeige durch optische Anzeigeelemente, die unmittelbar den einzelnen Funktionstasten zugeordnet sind und in der Regel in diese auch integriert sind, können dem Teilnehmer auch optische Hinweise in Form einer Anzeige auf dem an der Endeinrichtung vorhandenen Display gegeben werden.

Es ist die Aufgabe der Erfindung, im Zusammenhang mit dem Leistungsmerkmal "Anklopfen" die Funktionsmöglichkeiten zu erweitern und die Handhabung für den angeforderten Teilnehmer zu vereinfachen.

Dies wird dadurch erreicht, daß zur Beantwortung der übermittelten Verbindungsanforderung eine Signalisierungsinformation ausschließlich durch die Betätigung einer entsprechenden Funktionstaste an den sich in der Arbeitslage befindlichen zugeordneten Endgerät zu der Rechnersteuerung übertragen wird, daß aufgrund dieser Signali- sierungsinformation bei weiterhin bestehender An- forderung automatisch unter Überführung der be- stehenden Verbindung in einen Verbindungszu- stand, der eine Fortführung des vorherigen Gespräches zu einem späteren Zeitpunkt erneut zuläßt, eine Gesprächsverbindung mit der anfordernden Teilnehmerstelle bewirkt wird.

Mit einem einzigen Tastendruck wird also bei abgehobenem Handapparat bzw. bei weiterer Aktivierung einer diesem Abheben entsprechenden Funktion wird also die Gesprächsverbindung mit der anfordernden Teilnehmerstelle ermöglicht und gleichzeitig sichergestellt, daß in die ursprüngliche Gesprächsverbindung erneut eingetreten werden kann. Dies ist erfindungsgemäß dann möglich, wenn die Verbindung mit dem ursprünglichen Gesprächspartner in den Haltezustand übergeführt wird. Es kann also nach der Beendigung des angeforderten Gespräches erneut die ursprüngliche Zweierverbindung hergestellt werden. Diese Überführung in den Haltezustand kann auf bestehende externe Gesprächsverbindungen beschränkt sein. Die anfordernde Teilnehmerstelle kann gemäß einer Weiterbildung der Erfindung nach Art einer Konferenzverbindung zu der bestehenden Gesprächsverbindung unmittelbar durch die Tastenbetätigung hinzugeschaltet werden. Nach dem Austreten des anfordernden Teilnehmers aus der Konferenzverbindung ist die ursprüngliche Zweierverbindung fortzuführen. Als Funktionstaste ist die dem anfordernden Teilnehmer zugeordnete Teilnehmertaste zu programmieren. Unter der Voraussetzung einer bestehenden Internverbindung erfolgt bei ihrer Betätigung die Hinzuschaltung des anfordernden Teilnehmers. Die Teilnehmertaste dieses anfordernden Teilnehmers ist durch einen bestimmten Signalzustand der mit dieser Taste gekoppelten optischen Anzeigeeinrichtung erkennbar.

Das erfindungsgemäße Verfahren wird nachstehend anhand einer Figur erläutert.

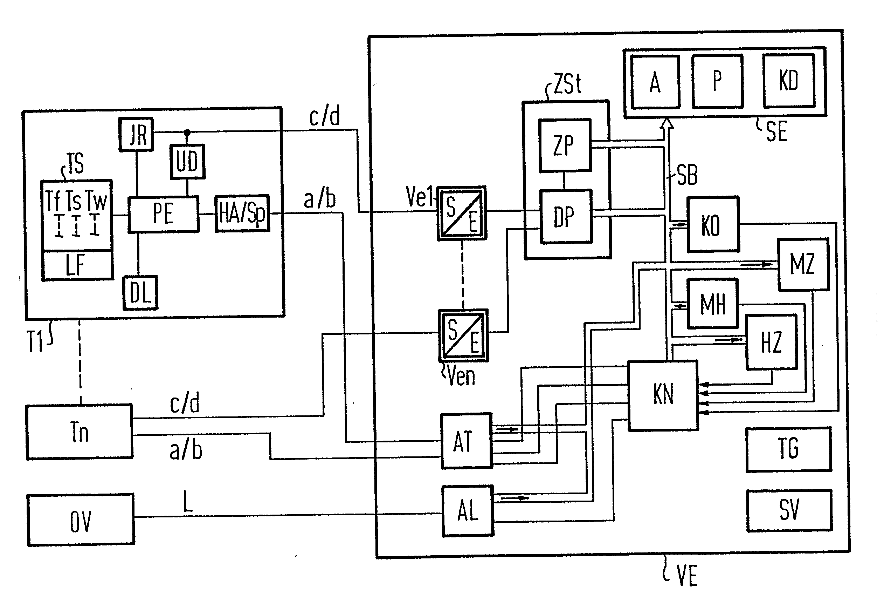

Die Figur zeigt eine schematische Darstellung einer Fernsprechvermittlungseinrichtung VE, an die Teilnehmerendeinrichtungen TI...Tn sternförmig angeschlossen sind. Die Sprachübertragung soll im Ausführungsbeispiel auf analoge Weise erfolgen. Für den Anschluß der Endeinrichtungen wird eine vieradrige Anschlußleitung verwendet, die jeweils aus einem die Nutzverbindung darstellenden Sprechadernpaar a/b und einem die Steuerverbindung darstellenden Signalisierungsadernpaar c/d besteht. Bei einem ausschließlich digitalen Vermittlungssystem wäre die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage gebildet wird.

Zur im wesentlichen prozeduralen Anpassung werden die Teilnehmerendeinrichtungen TI...Tn über eine Anschalteeinheit AT, die auch die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt dies über die Anschalteeinheit AL. Die Steuerungsaufgaben des Systems übernimmt die zentrale Steuerrechnereinheit ZSt, die über einen Systembus SB mit einer Speichereinheit SE, den genannten Anschalteeinheiten AT bzw. AL und den weiteren Systemkomponenten, wie beispielsweise der Koppeleinrichtung KN, einer für die Bildung der Mehrfrequenzcodezeichen dienenden Einheit MZ und einer für die Erzeugung der Hörtöne zuständigen Einheit HZ verbunden ist. Die Aufgaben der zentralen Steuerrechnereinheit sind im Ausführungsbeispiel auf zwei Prozessoren verteilt. Der Prozessor ZP soll beispielsweise der vermittlungstechnischen Steuerung dienen und durch den Prozessor DP soll unter Einschaltung der ein Sendeteil S und ein Empfangsteil E enthaltenden Verarbeitungseinheiten Ve die Signalisierungsbearbeitung erfolgen. Eine solche Verarbeitungseinheit Ve ist jedem Signalisierungsadernpaar c/d zugeordnet.

Über diese Signalisierungsadern c/d wird eine wechselseitige Informationsübertragung zwischen einer Endeinrichtung T und der zentralen Steuerrechnereinheit ZSt vorgenommen. Wie dies für die einzelne Funktionskomponenten zeigende Endeinrichtung TI angedeutet ist, können in einem Tastensatz Ts neben den Zifferntasten Tw der Wähltastatur weitere Funktionstasten Tf vorhanden sein. Bei der Betätigung der leitungs- bzw. teilnehmerindividuellen Tasten kann unmittelbar eine Belegung der betreffenden Leitung, z. B. der externen Leitung L, erfolgen und es kann die Verbindungsherstellung zu einem internen Teilnehmer vorgenommen werden. Das Kommunikationssystem VE soll ein Key-System sein, bei dem also an jeder Endeinrichtung der vermittlungstechnische Zustand aller übrigen Endeinrichtungen und der Belegungszustand der einzelnen externen Leitungen angezeigt wird. Als Anzeigeelemente können beispielsweise Leuchtdioden dienen, die in den jeweiligen Funktionstasten Tf integriert sind. Die Informationsübertragung von der zentralen Steuerrechnereinheit ZSt der Vermittlungseinrichtung zu den einzelnen Endeinrichtungen TI...Tn kann sich beispielsweise auf Einstellinformationen für diese Leuchtelemente beziehen, die zu unterschiedlichen Leuchtzuständen führen konnen. Dies erfolgt unter Einbeziehung der in jeder Endeinrichtung vorhan denen Steuereinheit PE. Im Ausführungsbeispiel sollen die von der Vermittlungseinrichtung VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer wird dann beispielsweise die an der jeweiligen Endeinrichtung vorgenommene Betätigung einzelner Tasten signalisiert. Dies soll in Verbindung mit der Steuereinheit PE durch die Einheit IR erfolgen. Die in der Gegenrichtung aufgrund der vorgesehenen Spannungsmodulation an den jeweiligen Signalisierungsadern auftretenden Informationsbits werden in Zusammenwirkung mit der Steuereinheit PE durch die Einheit UD registriert. Sie führen zur entsprechenden Ansteuerung der genannten Leuchtelemente LF. Zusätzlich oder anstelle dieser Leuchtelemente kann auch eine entsprechende Darstellung auf einem an der Endeinrichtung vorhandenen Display DL erfolgen. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display angezeigt werden.

Über das jeweilige Adernpaar a/b werden die Sprachinformationen übertragen. Mit diesen Sprechadern ist die Sprechschaltung SP verbunden. Sie dient im Zusammenhang mit dem Handapparat HA der Verarbeitung der übertragenen Sprachinformationen und bildet den Leitungsabschluß.

Eine derartige Vermittlungseinrichtung ist in ihrer Grundstruktur bekannt. Es erübrigt sich also insoweit eine detaillierte Darstellung der schaltungstechnischen Realisierung als auch eine Beschreibung der Vorgänge bei einem Verbindungsaufbau und dem Verbindungsabbau. Es sei lediglich erwähnt, daß die Prozessoren ZP und DP über den Systembus SB Zugriff zu den in der Speichereinrichtung SE abgelegten Daten haben. Diese betreffen u. a. das in dem Speicher P abgelegte gesamte Systemprogramm und die zu ihm gehörenden und im Arbeitsspeicher A enthaltenen betriebstechnischen Daten. In dem Speicherteil KD sind die Kundendaten abgelegt. Hierzu gehören beispielsweise die den einzelnen Teilnehmerendgeräten zugeteilten Berechtigungen für die Inanspruchnahme bestimmter Leistungsmerkmale. Das Konfigurieren dieser Daten kann beispielsweise über die Eingabetastatur einer als Betriebsterminal festlegbaren Endeinrichtung erfolgen.

Für die Realisierung von leistungsmerkmalsspezifischen Steuerprozeduren beinhaltet die Steuerrechnereinheit ZSt einzelne Programmsteuerungen, die auf die in den entsprechenden Speichern enthaltenen Steuerdaten zugreifen. So soll beispielsweise für das Kommunikationssystem VE die Möglichkeit bestehen, einem sich in einer Gesprächsverbindung befindlichen Teilnehmer den eigenen dringenden Verbindungswunsch anzukündigen. Dieses sogenannte "Anklopfen" besteht z. B. darin, daß von der Steuerrechnereinheit ZSt ein bestimmter Hinweiston periodisch in die für den gewünschten Teilnehmer bestehende Gesprächsverbindung eingeblendet wird. Zusätzlich kann eine entsprechende Anzeige auf dem Display DL erfolgen, der auch die Identität des die Gesprächsverbindung anfordernden Teilnehmers entnehmbar ist. Die Aktivierung dieses Leistungsmerkmals kann durch die Betätigung einer diesem Leistungsmerkmal zugeordneten Funktionstaste oder durch eine Kennzahlwahl erfolgen. Es kann auch vorgesehen sein, daß nach dem Anwählen des im Besetztzustand vorgefundenen gewünschten Teilnehmers dieses Anklopfen automatisch nach Ablauf einer bestimmten Zeit durch die Steuerrechnereinheit, die die einzelnen Verbindungsphasen überwacht, eingeleitet wird. Von dem Augenblick an, an dem die auf den dringenden Gesprächswunsch hinweisende Information z. B. in Form eines entsprechenden Hinweistones abgesetzt wird, ändert sich für die anfordernde Teilnehmerstelle der bis dahin eingespeiste Besetztton in einen besonderen Rufton. Damit wird dann dieser Teilnehmer darüber informiert, daß angeklopft wird.

Der angeforderte Teilnehmer hat nun die Möglichkeit, durch die Betätigung einer entsprechend programmierten Funktionstaste an seiner Endeinrichtung das Anklopfen einer anderen internen Teilnehmerstelle zu beantworten und damit ohne jegliche weitere Handhabung in eine Gesprächsverbindung mit dieser Teilnehmerstelle einzutreten. Es kann eine spezielle Funktionstaste, eine Servicetaste, vorgesehen sein, deren Betätigung in Abhängigkeit vom bestehenden Vermittlungszustand verschiedene Folgefunktionen auslösen kann. Durch die bei der Betätigung der Taste im Zustand der für diese Teilnehmerstelle bestehenden Verbindungsanforderung ihrer der zentralen Rechnersteuerung übermittelte Signalisierungsinformation werden miteinander gekoppelte Vermittlungsprozeduren abgerufen. Die prozedurrelevanten Steuerdaten sind in den entsprechenden Teilen der Speichereinrichtung SE abgespeichert. Mit der Betätigung der Servicetaste Ts im Anklopfzustand wird bewirkt, daß eine bestehende externe Leitungsverbindung in den Haltezustand übergeführt wird. Die betreffende externe Leitung erhält also einen entsprechenden Leitungsabschluß. Dies kann beispielsweise durch den Baustein MH erfolgen. Über diesen Baustein kann auf eine im Haltezustand befindliche externe Leitung über die Koppeleinrichtung KN Musik eingespielt werden. Die Betätigung der Taste Ts führt gleichzeitig zu einer Verbindungsherstellung mit der anfordernden Teilnehmerstelle. Nach der Beendigung dieses Gespräches hat der angeforderte Teilnehmer dann wiederum die Möglichkeit, seine ursprüngliche Gesprächsverbindung aus dem Haltezustand in den Gesprächszustand zurückzuführen. Bei der Verbindungsherstellung mit der anfordernden Teilnehmerstelle aufgrund der Tastenbetätigung bleibt also die ursprüngliche Verbindung erhalten.

Es kann festgelegt sein, daß dies nur bei einer externen Gesprächsverbindung der Fall ist, während eine interne Verbindung bei der Beantwortung des Anklopfens mit der Servicetaste ausgelöst wird. Die Erhaltung der ursprünglichen Gesprächsverbindung bei der Verbindungsherstellung mit einem anfordernden Teilnehmer kann auch dadurch erfolgen, daß dieser nach Art einer Konferenzverbindung zu der bestehenden Gesprächsverbindung hinzugeschaltet wird. Dies kann unabhängig von der Servicetaste durch eine weitere Funktionstaste Tf erfolgen, die an jeder Endeinrichtung für jede andere Teilnehmerstelle vorgesehen ist. Die bei der Betätigung dieser dem anfordernden Teilnehmer zugeordneten Taste im Anklopfzustand der Rechnersteuerung ZSt übermittelten Information wird über die der Rechnersteuerung ZSt zugehörige Vermittlungssteuerung eine Prozedur realisiert, mit der unter Einbeziehung eines Konferenzsatzes KO die anfordernde Teilnehmerstelle zu der bestehenden internen Verbindung hinzugeschaltet wird. Der anfordernde Teilnehmer kann also über die so gebildete Konferenzverbindung mit dem von ihm angeforderten Teilnehmer in eine Gesprächsverbindung treten. Die dem betreffenden Teilnehmer zugeordnete Teilnehmertaste ist dadurch erkennbar, daß die mit einer solchen Taste jeweils gekoppelte optische Anzeigeeinrichtung einen bestimmten Signalzustand einnimmt. Nach dem Austreten des anfordernden Teilnehmers aus der Konferenzverbindung kann dann die ursprüngliche Zweierverbindung fortgesetzt werden.

Im Ausführungsbeispiel ist mit TG der für die gesamte Taktversorgung vorhandene Taktgenerator und mit SV die der Stromversorgung dienende Einheit bezeichnet.

## Ansprüche

1. Verfahren zur Durchführung einer leistungsmerkmalsbezogenen Steuerprozedur im Zusammenhang mit der Möglichkeit, in einem rechnergesteuerten Kommunikationssystem, insbesondere einem Key-Kommunikationssystem, einem Teilnehmer, der sich in einer Gesprächsverbindung befindet, eine ihn betreffende dringende Verbindungsanforderung durch ein darauf hinweisendes Aufmerksamkeitszeichen anzukündigen (Anklopfen), wobei für den Anschluß einer Endeinrichtung an das Kommunikationssystem eine der Übertragung von Nutzinformationen dienende Nutzverbindung und zusätzlich eine Steuerverbindung schaltbar ist, über die jeweils Informationen übertragbar sind, die u. a. aufgrund der bei der Betätigung von Tasten abgeleiteten Anreize gebildet werden,
**dadurch gekennzeichnet,**
daß zur Beantwortung der übermittelten Verbindungsanforderung eine Signalisierungsinformation ausschließlich durch die Betätigung einer entsprechenden Funktionstaste an dem der angeforderten Teilnehmerstelle zugeordneten und sich im Arbeitszustand befindlichen Endgerät zu der Rechnersteuerung übertragen wird, daß aufgrund dieser Information bei weiterhin bestehender Anforderung automatisch unter Überführung der bestehenden Verbindung in einen Verbindungszustand, der eine Fortführung des vorherigen Gespräches zu einem bestimmten Zeitpunkt erneut zuläßt, weiterhin eine Gesprächsverbindung mit der anfordernden Teilnehmerstelle bewirkt wird.

2. Verfahren nach Anspruch 1,
**dadurch gekennzeichnet,**
daß zur Fortführung des vorherigen Gespräches die bestehende Leitungsverbindung zumindest einer bestimmten Kategorie in den Haltezustand übergeführt wird und gleichzeitig die Verbindung zwischen der anfordernden Teilnehmerstelle und der angeforderten Teilnehmerstelle durchgeschaltet wird.

3. Verfahren nach Anspruch 2,
**dadurch gekennzeichnet,**
daß die Überführung in den Haltezustand auf die externe Leitung einer bestehenden externen Gesprächsverbindung beschränkt ist.

4. Verfahren nach Anspruch 1,
**dadurch gekennzeichnet,**
daß der anfordernde Teilnehmer nach Art einer Konferenzverbindung zu der bestehenden Gesprächsverbindung unmittelbar durch die Tastenbetätigung hinzugeschaltet wird und daß nach seinem Austreten aus der Konferenzverbindung die ursprüngliche Zweierverbindung fortgeführt wird.

5. Verfahren nach Anspruch 4,
**dadurch gekennzeichnet,**
daß unter der Voraussetzung einer bestehenden Internverbindung die Hinzuschaltung des anfordernden Teilnehmers durch die Betätigung der dem anfordernden Teilnehmer an der Endeinrichtung des angeforderten Teilnehmers zugeordnete Teilnehmertaste erfolgt, wobei dieser Teilnehmer durch einen bestimmten Signalzustand der mit der Taste gekoppelten optischen Anzeigeeinrichtung erkennbar ist.